(19) Europäisches Patentamt
European Patent Office
Office européen des brevets

(11) Publication number : **0 385 676 B1**

(12) **EUROPEAN PATENT SPECIFICATION**

(45) Date of publication of patent specification : **15.06.94 Bulletin 94/24**

(51) Int. Cl.$^5$ : **A01N 47/48,** A01N 57/34, C02F 1/50

(21) Application number : **90301978.4**

(22) Date of filing : **23.02.90**

(54) **Biocidal compositions and treatments.**

(30) Priority : **24.02.89 GB 8904274**

(43) Date of publication of application : **05.09.90 Bulletin 90/36**

(45) Publication of the grant of the patent : **15.06.94 Bulletin 94/24**

(84) Designated Contracting States : **AT BE CH DE DK ES FR GR IT LI LU NL SE**

(56) References cited :
**EP-A- 0 043 926**
**GB-A- 2 145 708**
**US-A- 4 835 144**

(73) Proprietor : **Albright & Wilson Limited
210-222 Hagley Road West
Oldbury Warley West Midlands B68 0NN (GB)**

(72) Inventor : **Veale, Malcolm Alfred
7 Lower Grinsty Lane,
Callow Hill
Redditch, Worcestershire B97 5PT (GB)**
Inventor : **Talbot, Robert Eric
25 Sunfield Road
Cannock, Staffordshire WS11 1NJ (GB)**
Inventor : **Matthews, Nigel Stephen
65 Strathmore Road
Horfield, Bristol BS7 9GH (GB)**
Inventor : **Cox, David Albert Edward
72 Station Road
Shirehampton, Bristol BS11 9XA (GB)**
Inventor : **Lloyd, Graham Robert
5 Telford Gardens
Brewood, Staffordshire ST19 9ED (GB)**

(74) Representative : **Savidge, Roger Gordon
Madgwick et al
Albright & Wilson Limited
Patents Department
210-222 Hagley Road West
Oldbury
Warley, West Midlands B68 ONN (GB)**

EP 0 385 676 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to biocidal compositions comprising tetraorgano phosphonium salts and biocidal treatments therewith.

Lower hydroxy alkyl phosphonium salts, and especially tetrakis hydroxymethyl phosphonium (herein referred to as "THP") salts are described for use as biocides for water treatment, and plant protection, in GB 2145708, GB-A-2178960, GB-A-2182563, GB -A-2201592 and GB-A-2205310. The use of long chain alkyl phosphonium salts for water treatment is known from EP066544. US 3013085 discloses the use of tetrakis (1-hydroxyalkyl) phosphonium salts wherein each alkyl group has two or more carbon atoms to prevent the development of certain pathogenic fungi. British Patent Application no. 9001831 discloses certain phosphonium salts having an alkyl or alkenyl group with up to three carbon atoms and hydroxy methyl groups.

2-(Thiocyanomethylthio) benzthiazole (herein after referred to as TCMTB) and its sulphinyl derivatives have been described as fungicides in USP3520976 and FR2016023, the disclosure of which is hereby incorporated by reference. EP-0043926 describes the use of biocides comprising derivatives of 2-cyanoethyl-phosphoric acid.

US 4 835 144 discloses a synergistic aqueous mixture of tri n-butyl tetradecyl phosphonium chloride and methylene bis (thiocyanate) for use in inhibiting bacterial growth in water systems.

Most of the hitherto methods of treating water involve the use of a single biocide to kill or inhibit the growth of micro-organisms.

The advantage of using a synergistic biocidal composition, as used in our invention, for treating water systems to kill or inhibit the growth of micro-organisms therein is that the biocidal mix is significantly more effective than either biocide acting in isolation.

We have now found that combinations of tetraorgano phosphonium salts and organic thiocyano compounds possess striking synergistic properties as biocides.

Accordingly, the present invention provides a synergistic biocidal composition comprising effective synergistic proportions of a tetrakis (hydroxymethyl) phosphonium cation, and 2-thiocyanomethyl thiobenzthiazole (TCMTB).

The tetrakis (hydroxymethyl) phosphonium cation is in the form:

$$[P(CH_2OH)_4]^{4+} X^{4-}$$

wherein X is an anion which provides a salt which is preferably soluble at least to a concentration of 0.5gm per litre of water at 25°C such as sulphate, chloride or phosphate or less preferably sulphite, phosphite, bromide, nitrate, borate, acetate, formate, lactate, methosulphate, citrate or carbonate. However other anions may be used which provide salts of reduced solubility in water but soluble in organic solvents e.g. alcohols or hydrocarbons.

The preferred THP salts are sulphate (THPS) and THP chloride (THPC). The 2-thiocyanomethyl thiobenzthiazole compound may be present in the composition in a weight ratio of 1:9 to 10:1 preferably 1:3 to 9:1.

The micro biocidal compositions of the invention may also include at least one 2-hydroxyalkyl ester of an organic thiolsulphonic acid e.g. of formula $R^{10}$-$SO_2$-$SCHR^{11}$-CHR-$^{12}$OH, wherein each of $R^{10}$ and $R^{12}$, which may be the same or different, represents an alkyl group of 1-12 carbon atoms, optionally substituted by halogen or hydroxyl, or represents an aryl group optionally substituted by an alkyl, halogen, hydroxyl or nitro group, or represents an aralkyl group, or $R^{12}$ may also be hydrogen, and $R^{11}$ represents hydrogen or an alkyl group of 1-12 carbon atoms or an aryl radical. The compounds are described in USP3639604 the disclosure of which is hereby incorporated by reference. These compounds may reduce production of cyanide from any decomposition of the thiocyanate.

The biocidal components of our invention are useful for treating aerobic or anaerobic water systems contaminated or liable to be contaminated with microorganisms. For example they are effective against Pseudomonas aeruginosa, and Legionella pneumophila in boiler water, cooling water, industrial process water, geothermal water, central heating and air conditioning systems, for killing algae in swimming pools, and for treating cooling water in power stations and for marine engines.

The biocides are also useful in killing sulphate reducing bacteria such as Desulphovibrio in the above systems and especially in oil field produced water, injection water, drilling fluids or water for hydrostatic testing. They are also useful as preservatives in aqueous based formulations such as bitumen and tar emulsions, paper sizes, adhesives, paints, cellulosic pulps including pulp thin stock and backwash recirculating liquor.

The biocides are useful in disinfectants including farmyard, domestic and surgical disinfectants. They may be used in the fumigation of grain silos, crops and storage areas.

The biocides are useful for killing bryophites, including mosses and liverworts, lichens, and algae in lawns and gardens and on paths, drives, roadways, walls and other structures and on railways, airports and industrial estates.

The biocides are useful for protecting plants against fungi, bacteria, viruses and other microbial plant pathogens, by application to the plants and or to the soil in which they are growing or to be grown, or for use in a seed dressing.

The selective activity of the biocides is concentration dependent. Generally at concentrations of between 10 and 2,000 ppm preferably 20 to 1,500 eg 30 to 1,000 especially 50 to 500ppm the biocides show selective activity against lower organisms such as bacteria, algae, mosses and fungi, but exhibit relatively low toxicity towards higher plants, fish and mammals. At higher concentrations, e.g greater than 0.2% up to saturation, preferably 0.5 to 75% e.g. 1 to 60% and at dosages of greater than about 2 kg per hectare e.g. 2.5 to 5kg per hectare the biocides are, however, effective total herbicides.

The invention provides compositions containing the aforesaid biocides. In particular for use in water treatment and in agriculture we have found that the biocides are synergistic with surfactants.

The surfactant may for example consist substantially of an at least sparingly water-soluble salt of sulphonic or mono esterified sulphuric acids, e.g. an alkylbenzene sulphonate, alkyl sulphate, alkyl ether sulphate, olefin sulphonate, alkane sulphonate, alkylphenol sulphate, alkylphenol ether sulphate, alkylethanolamide sulphate, alkylethanolamide ether sulphate, or alpha sulpho fatty acid or its esters each having at least one alkyl or alkenyl group with from 8 to 22, more usually 10 to 20, aliphatic carbon atoms.

The expression "ether" hereinbefore refers to compounds containing one or more glyceryl groups and/or an oxyalkylene or polyoxyalkylene group especially a group containing from 1 to 20 oxyethylene and/or oxypropylene groups. One or more oxybutylene groups may additionally or alternatively be present. For example, the sulphonated or sulphated surfactant may be sodium dodecyl benzene sulphonate, potassium hexadecyl benzene sulphonate, sodium dodecyl dimethyl benzene sulphonate, sodium lauryl sulphate, sodium tallow sulphate, potassium oleyl sulphate, ammonium lauryl monoethoxy sulphate, or monoethanolamine cetyl 10 mole ethoxylate sulphate.

Other anionic surfactants useful according to the present invention include alkyl sulphosuccinates, such as sodium di-2-ethylhexylsulphosuccinate and sodium dihexylsulphosuccinate, alkyl ether sulphosuccinates, alkyl sulphosuccinamates, alkyl ether sulphosuccinamates, acyl sarcosinates, acyl taurides, isethionates, soaps such as stearates, palmitates, resinates, oleates, linoleates, and alkyl ether carboxylates. Anionic phosphate esters and alkyl phosphonates, alkyl amino and imino methylene phosphonates may also be used. In each case the anionic surfactant typically contains at least one aliphatic hydrocarbon chain having from 8 to 22, preferably 10 to 20 carbon atoms, and, in the case of ethers, one or more glyceryl and/or from 1 to 20 oxyethylene and/or oxypropylene and/or oxybutylene groups.

Preferred anionic surfactants are sodium salts. Other salts of commercial interest include those of potassium, lithium, calcium, magnesium, ammonium, monoethanolamine, diethanolamine, triethanolamine, alkyl amines containing up to seven aliphatic carbon atoms,and alkyl and/or hydroxyalkyl phosphonium.

The surfactant may optionally contain or consist of nonionic surfactants. The nonionic surfactant may be, e.g. a $C_{10-22}$ alkanolamide of a mono or di- lower alkanolamine, such as coconut monoethanolamide. Other nonionic surfactants which may optionally be present, include tertiary acetylenic glycols, polyethoxylated alcohols, polyethoxylated mercaptans, polyethoxylated carboxylic acids, polyethoxylated amines, polyethoxylated alkylolamides, polyethoxylated alkylphenols, polyethoxylated glyceryl esters, polyethoxylated sorbitan esters, polyethoxylated phosphate esters, and the propoxylated or ethoxylated and propoxylated analogues of all the aforesaid ethoxylated nonionics, all having a $C_{8-22}$ alkyl or alkenyl group and up to 20 ethyleneoxy and/or propyleneoxy groups. Also included are polyoxypropylene/polyoxethylene copolymers, polyoxybutylene/polyoxyethylene copolymers and polyoxybutylene/ polyoxypropylene copolymers. The polyoxyethylene polyoxypropylene and polyoxybutylene compounds may optionally be end-capped with, e.g. benzyl groups to reduce their foaming tendency.

Compositions of our invention may contain amphoteric surfactant.

The amphoteric surfactant may for example be a betaine, e.g. a betaine of the formula:- $R_3M^+CH_2COO^-$, wherein each R is an alkyl, cycloalkyl, alkenyl or alkaryl group and preferably at least one, and most preferably not more than one R, has an average of from 8 to 20, e.g. 10 to 18 aliphatic carbon atoms and each other R has an average of from 1 to 4 carbon atoms. Particularly preferred are the quaternary imidazoline betaines of the formula:

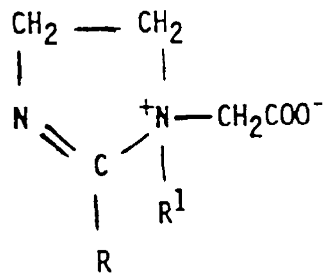

wherein R and $R^1$ are alkyl, alkenyl, cycloalkyl, alkaryl or alkanol groups having an average of from 1 to 20 aliphatic carbon atoms and R preferably has an average of from 8 to 20, e.g. 10 to 18 aliphatic carbon atoms and $R^1$ preferably has 1 to 4 carbon atoms. Other amphoteric surfactants for use according to our invention include alkyl amine ether sulphates, sulphobetaines and other quaternary amine or quaternised imidazoline sulphonic acids and their salts, and other quaternary amine or quaternised imidazoline carboxylic acids and their salts and Zwitterionic surfactants, e.g. N-alkyl taurines, carboxylated amido amines such as $RCONH(CH_2)_2N^+(CH_2CH_2CH_3)_2CH_2CO_2$, and amino acids having, in each case, hydrocarbon groups capable of conferring surfactant properties (e.g. alkyl, cycloalkyl, alkenyl or alkaryl groups having from 8 to 20 aliphatic carbon atoms).

Typical examples include 2 tallow alkyl, 1-tallow amido alkyl, 1-carboxymethyl imidazoline and 2 coconut alkyl N-carboxymethyl 2-(hydroxyalkyl) imidazoline. Generally speaking any water soluble amphoteric or Zwitterionic surfactant compound which comprises a hydrophobic portion including a $C_{8-20}$ alkyl or alkenyl group and a hydrophilic portion containing an amine or quaternary ammonium group and a carboxylate, sulphate or sulphonic acid group may be used in our invention.

Compositions of our invention may also include cationic surfactants.

The cationic surfactant may for example be an alkylammonium salt having a total of at least 8, usually 10 to 30, e.g. 12 to 24 aliphatic carbon atoms, especially a tri or tetra-alkylammonium salt. Typically alkylammonium surfactants for use according to our invention have one or at most two relatively long aliphatic chains per molecule (e.g. chains having an average of 8 to 20 carbon atoms each, usually 12 to 18 carbon atoms) and two or three relatively short chain alkyl groups having 1 to 4 carbon atoms each, e.g. methyl or ethyl groups, preferably methyl groups.

Typical examples include dodecyl trimethyl ammonium salts.

Benzalkonium salts having one 8 to 20 C alkyl group two 1 to 4 carbon alkyl groups and a benzyl group are also useful.

Another class of cationic surfactants useful according to our invention are N-alkyl pyridinium salts wherein the alkyl group has an average of from 8 to 22, preferably 10 to 20 carbon atoms. Other similarly alkylated heterocyclic salts, such as N-alkyl isoquinolinium salts, may also be used.

Alkylaryl dialkylammonium salts, having an average of from 10 to 30 aliphatic carbon atoms are useful, e.g. those in which the alkylaryl group is an alkyl benzene group having an average of from 8 to 22, preferably 10 to 20 aliphatic carbon atoms and the other two alkyl groups usually have from 1 to 4 carbon atoms, e.g. methyl groups.

Other classes of cationic surfactant which are of use in our invention include alkyl imidazoline or quaternised imidazoline salts having at least one alkyl group in the molecule with an average of from 8 to 22 preferably 10 to 20 carbon atoms. Typical examples include alkyl methyl hydroxyethyl imidazolinium salts, alkyl benzyl hydroxyethyl imidazolinium salts, and 2 alkyl-1-alkylamidoethyl imidazoline salts.

Another class of cationic surfactant for use according to our invention comprises the amido amines such as those formed by reacting a fatty acid having 8 to 22 carbon atoms or an ester, glyceride or similar amide forming derivative thereof, with a di or poly amine, such as, for example, ethylene diamine or diethylene triamine, in such a proportion as to leave at least one free amine group. Quaternised amido amines may similarly be employed.

Alkyl phosphonium and hydroxyalkyl phosphonium salts having one $C_{8-20}$ alkyl groups and three $C_{1-4}$ alkyl or hydroxyalkyl groups may also be used as cationic surfactants in our invention.

Typically the cationic surfactant may be any water soluble compound having a positively ionised group, usually comprising a nitrogen atom, and either one or two alkyl groups each having an average of from 8 to 22 carbon atoms.

The anionic portion of the cationic surfactant may be any anion which confers water solubility, such as

formate, acetate, lactate, tartrate, citrate, chloride, nitrate, sulphate or an alkylsulphate ion having up to 4 carbon atoms such as a methosulphate. It is preferably not a surface active anion such as a higher alkyl sulphate or organic sulphonate.

Polyfluorinated anionic, nonionic or cationic surfactants may also be useful in the compositions of our invention. Examples of such surfactants are polyfluorinated alkyl sulphates and polyfluorinated quaternary ammonium compounds.

Compositions of our invention may contain a semi-polar surfactant, such as an amine oxide, e.g. an amine oxide containing one or two (preferably one) $C_{8-22}$ alkyl group, the remaining substituent or substituents being preferably lower alkyl groups, e.g. $C_{1-4}$ alkyl groups or benzyl groups.

Particularly preferred for use according to our invention are surfactants which are effective as wetting agents, typically such surfactants are effective at lowering the surface tension between water and a hydrophobic solid surface. We prefer surfactants which do not stabilise foams to a substantial extent.

Mixtures of two or more of the foregoing surfactants may be used. In particular mixtures of non-ionic surfactants with cationic and/or amphoteric and/or semi polar surfactants or with anionic surfactants may be used. Typically we avoid mixtures of anionic and cationic surfactants, which are often less mutually compatible.

Preferably the organo phosphorus compound and the surfactant are present in a relative weight concentration of from 1:1000 to 1000:1, more usually 1:50 to 200:1, typically 1:20 to 100:1, most preferably 1:10 to 50:1, e.g. 1:1 to 20:1 especially 2:1 to 15:1.

Effective doses of the mixture of THP, TCMTB and surfactant are typically from 2 ppm to 2000 ppm more usually 20 ppm to 1,000 ppm e.g. 50 ppm to 500 ppm especially 100 to 250 ppm.

Compositions for use in water treatment may additionally or alternatively contain other biocides, oxygen scavengers, dispersants, antifoams, solvents, scale inhibitors, corrosion inhibitors and/or flocculants.

Compositions according to our invention for use in controlling bryophites, lichens or fungal or microbial plant pathogens, contain an effective amount of a biocide as aforesaid, together with a horticulturally or agriculturally acceptable diluent, carrier and/or solvent therefor.

THP may be present as a solution in water at effective concentrations up to saturation. It is usually supplied as concentrates at about 5 to 80% by weight concentration, e.g. 75% by wt. before mixing with the TCMTB but will normally be diluted to a concentration of from 0.01 to 10% by wt. before application. Where damage to higher plants is to be avoided it is preferred to use concentrations below 1% w/w biocide, preferably below 0.2%. Alternatively the biocides may be admixed with or absorbed upon inert, particulate, non-phytotoxic solids such as talc or dissolved in organic solvents or suspended in or as dispersions or emulsions. Thus the compositions of the invention are preferably in the form of emulsifiable concentrates in organic solvents such as alcohols, hydrocarbons, and amides such as dimethyl formamide including cyclic amides such as N- methyl pyrrolidone, the concentrate also containing a surfactant e.g. as specified above. They may be used in conjunction with other moss killers or biocides, such as herbicides, fungicides, bactericides, insecticides and weedkillers, or with surfactants, wetting agents, adhesives, emulsifiers, suspending agents, thickeners, synergists, hormones, plant growth regulators or plant nutrients.

The compositions of our invention may be applied to lawns, flower or vegetable beds, arable land, meadowland, orchards or woodland, or hydroponic beds, or to the seeds, roots, leaves, flowers, fruit and/or stems of plants, or to paths, roads, walls, wood-work, brickwork or similar invasible surfaces.

The composition may be of value, inter alia, in controlling moss or algae in lawns or on paths or walls, as seed dressings, as sprays for controlling fungal, bacterial or viral infections on leaves, flowers and fruit, such as mildew, botrytis, rust, fusarium, mosaic diseases or wilt, for application to soil or to the roots of seedlings (e.g. of brassica seedlings to inhibit club root) and in the control of numerous fungal, viral, protozoal and bacterial diseases of plants, including fungal blights such as potatoe blight, cankers such as apple canker, scabs, root rot, and base rot of bulbs. The compositions are especially effective in protecting cereal crops including wheat, barely, rye, oats, rice maize millet and sesame against a broad spectrum of plant diseases.

Other crops of importance which may be protected according to our invention include sugar cane; root vegetables including carrots, parsnips, turnips, beetroot, sugar beet, radishes, swedes and mangolds; brassicas including cabbages, broccoli, cauliflower and sprouts; grazing land; pulses including peas, broad beans, French beans, runner beans, navy beans, kidney beans and lentils; curcubaceous plants including cucumbers, marrows, gourds and squashes, oilseed rape, timber, rubber, cotton, coffee, cocoa, jute, tomatoes, potatoes, yams, tobacco, bananas, coconut palm, olives, alliums including onions, shalots, leeks, garlic, chives and spring onions, ground nuts, peanuts, sorghum, oil palm, roses, hemp, flax, lucerne, alfalfa, tea and fruit, including citrus fuit, apples, plums, peaches, nectarines, mangoes, pears, cherries, grapes, berries, currants, dates, figs avacados, almonds, and apricots.

The mixtures of THP and TCMTB are usually more effective biocides than the individual compounds. The

invention covers the use of the compositions to treat aqueous and also their formation in situ by separate addition of the components (i) and (ii) to the system.

The invention will be illustrated by the following examples:

The invention is illustrated in the following Examples in which "ai" means active ingredient THPS means bis (tetrakis(hydroxymethyl)phosphonium] sulphate and TCMTB means 2-thiocyanomethyl thio-benzthiazole.

## EXAMPLE 1

Slimicidal control in paper manufacturing system

An assessment of microbiocidal performance was carried out in a typical paper manufacturing pulp thin stock. The biocide capability of microbial population reduction at different concentrattions with time being measured.

Biocide actives assessed:-

(i) THPS 75% active aqueous solution
(ii) TCMTB active formulation A (see below)
(iii) 4000 ppm ai TCMTB stock emulsion of formulation A in water
(iv) 4000 ppm active (total) stock emulsion/solution comprising 2000ppm TCMTB from formulation A 2000ppm ai THPS.

TCMTB formulation A

| Material | %w/w |
|---|---|
| 80% ai technical grade TCMTB | 20.0 |
| Pine oil | 2.5 |
| Diethyleneglycol monoethyl ether | 2.5 |
| Calcium alkyl aryl sulphate, nononic surfactant blend | 5.0 |
| Water | 70.0 |

Paper manufacturing pulp thin stock

| Example specification: | w/w |
|---|---|
| Virgin fibre stock | 0.333% |

Containing 0.125% ketene dimer emulsion and retention aid at 0.2%.

Test Procedure

Test organisms

| | |
|---|---|
| Pseudomonas aeruginosa | NCIB 8295 |
| Pseudomonas fluorescens | NCIB 8194 |
| Klebsiella sp | NCIB 10104 |
| Serratia marcescens | NCIB 952B |

YEAST

Pink yeast pigmented wild strain isolated from ketone dimer emulsion.

FUNGI

| | |
|---|---|
| Aspergillus niger | CMI 17454 |
| Aureobasidium pullulans | CMI 70103 |
| Penicillium expansum | CMI 39761 |
| Chaetomium globosum | CMI 16203 |

Bacteria were grown up in tryptone soya broth at 30° C for 24 hours.

The fungi and yeast were grown on Potato Dextrose Agar plates at 22°C ± 2°C for up to 10 days for fungi and 3 days for yeast.

1.2 preparation of test inoculum

The bacterial cultures diluted 1+9 in sterile 0.25 strength Ringers solution.

To the fungal or yeast slope(s) was added 10 ml of sterile ¼ strength Ringer solution. The culture surface was abraded with a sterile glass spreader to produce a spore/conidial suspension in the Ringers solution. The resultant suspensions were further diluted 1 + 9 in sterile ¼ strength Ringers solution. Aliquots of 5 ml were then taken as appropriate and bulked together to produce bacterial, or mixed inocula.

1.3 Test

To 100 ml of pulp thin stock was added 1 ml of freshly prepared inocula. Inoculated systems were then dosed with required levels of test biocide to give concentrations in ppm active ingredients(s) as specified in the Tables. Untreated control tests were run to provide baseline values for viable counts and results analysis.

Viable count estimations for surviving organisms were carried out at 2, 4 and 24 hours. Samples from test being diluted 1+99ml in buffered Peptone water containing 0.5% "TWEEN" 80 to $10^{-4}$ dilution. Dilutions and sample were plated out (mills/miora technique -0.02ml) onto tryptone soya agar. The test was carried out at 22°C±2°C. Plates were read after 4 days incubation and results recorded. Log reductions in viable counts over average control value were calculated for each biocide active test concentration.

No biocide controls

| Contact Time: hrs | Viable count cfu/ml | |
|---|---|---|
| 0 | $8.5x10^6$ | } |
| 2 | $4.5x10^6$ | } Ar.Log viable |
| 4 | $3.2x10^7$ | } count = 7.50 |
| 24 | $8.0x10^8$ | } |

cfu/ml = colony forming units/ml

Log reduction = log reduction in viable count was achieved by dividing test concentration by the average control count value.

Test Biocide:- TCMTB as formulation A

| BIOCIDE TOTAL ACTIVE CONCENTRATION PPM | CONTACT TIME (hrs) | | | | | |
|---|---|---|---|---|---|---|
| | 2 | | 4 | | 24 | |
| | Viable Count | Log Reduction | Viable Count | Log Reduction | Viable Count | Log Reduction |
| 100 | $4.5x10^6$ | 0.85 | $5.0x10^6$ | 0.80 | $2.1x10^6$ | 2.18 |
| 200 | $5.0x10^6$ | 0.80 | $6.7x10^5$ | 1.67 | $2.5x10^5$ | 2.10 |
| 300 | $2.5x10^6$ | 1.10 | $4.9x10^5$ | 1.81 | $1.9x10^5$ | 2.22 |
| 400 | $6.7x10^5$ | 1.67 | $5.5x10^4$ | 2.76 | $1.9x10^5$ | 2.22 |
| 500 | $7.4x10^5$ | 1.63 | $6.1x10^5$ | 1.72 | $6.0x10^4$ | 2.72 |

Test Biocide:- THPS from 75% concentrate

| BIOCIDE TOTAL ACTIVE CONCENTRATION PPM | CONTACT TIME (hrs) 2 | | 4 | | 24 | |
|---|---|---|---|---|---|---|
| | Viable Count | Log Reduction | Viable Count | Log Reduction | Viable Count | Log Reduction |
| 25 | $5.0 \times 10^5$ | 1.80 | $1.0 \times 10^6$ | 1.50 | $5.0 \times 10^6$ | 0.80 |
| 50 | $1.2 \times 10^5$ | 2.42 | $2.5 \times 10^4$ | 3.10 | $2.5 \times 10^5$ | 3.10 |
| 100 | $2.0 \times 10^2$ | 5.20 | $6.5 \times 10^2$ | 4.69 | $1.9 \times 10^5$ | 2.22 |
| 150 | $2.0 \times 10^2$ | 5.20 | $4.5 \times 10^2$ | 4.85 | $4.5 \times 10^2$ | 4.85 |
| 200 | $6.5 \times 10^2$ | 4.69 | $4.0 \times 10^2$ | 4.90 | $2.0 \times 10^2$ | 5.20 |

Test Biocide:- TCMTB from 4000 ppm ai stock emulsion of formulation A in water

| BIOCIDE TOTAL ACTIVE CONCENTRATION PPM | CONTACT TIME (hrs) 2 | | 4 | | 24 | |
|---|---|---|---|---|---|---|
| | Viable Count | Log Reduction | Viable Count | Log Reduction | Viable Count | Log Reduction |
| 75 | $3.0x10^6$ | 1.02 | $1.0x10^6$ | 1.50 | $2.0x10^6$ | 1.20 |
| 100 | $4.5x10^6$ | 0.85 | $2.0x10^6$ | 1.20 | $1.5x10^6$ | 1.32 |
| 200 | $2.5x10^6$ | 1.10 | $6.0x10^5$ | 1.72 | $1.9x10^5$ | 2.22 |
| 300 | $7.7x10^5$ | 1.61 | $8.0x10^5$ | 1.60 | $2.3x10^5$ | 2.14 |
| 400 | $6.5x10^5$ | 1.69 | $3.7x10^5$ | 1.93 | $1.4x10^5$ | 2.35 |

Test Biocide :- TCMTB/THPS mixed from 2000 ppm TCMTB/2000 ppm THPS stock emulsion

| BIOCIDE TOTAL ACTIVE CONCENTRATION PPM | CONTACT TIME (hrs) 2 | | 4 | | 24 | |
|---|---|---|---|---|---|---|
| | Viable Count | Log Reduction | Viable Count | Log Reduction | Viable Count | Log Reduction |
| 75 | $1.9x10^3$ | 4.22 | <10 | >75 | <10 | >7.5 |
| 100 | $1.4x10^3$ | 4.35 | <10 | >75 | $5.0x10^1$ | 5.8 |
| 200 | $5.0x10^1$ | 5.8 | <10 | >75 | <10 | >7.5 |
| 300 | <10 | >7.5 | <10 | >75 | <10 | >7.5 |
| 400 | <10 | >7.5 | <10 | >75 | <10 | >7.5 |

EXAMPLE 2

A pulp mill backwater containing ketone dimer was used to assess the log kill for bacteria, yeast and fungi of TCMTB, THPS and a 50/50 TCMTB/THPS solution, following the procedures of Example 1.

The results after contact time of 2 hours were plated as log kill bacteria against total biocide concentration, and are illustrated in Fig 1. At concentrations above 70% by weight total active biocide the mixed biocide represented by lozenges gives consistently higher log kills than either the THPS alone (triangles) or the TCMTB alone (squares), at equal total biocide concentrations.

The log kill yeast after 4 hours was plotted and is illustrated by Figure 2. The mixed biocide (crosses) achieves consistently higher log kills than either THPS (lozenges) or TCMTB (squares).

EXAMPLE 3

A backwater containing rosin/alum size was used following the method of Example 1.

The log kill fungi after 24 hours was plotted and is illustrated in Fig 3. The log kill by the 50:50 mixed biocide (crosses) was consistently higher than the log kill due to TCMTB (squares) or THPS (lozenges).

These experiments illustrate the substantial synergism between TCMTB and THPS.

EXAMPLE 4

THPS, TCMTB and mixtures of THPS with TCMTB in ratios of 1:9, 2:8, 3:7, 4:6, 5:5, 6:4, 7:3, 8:2, 9:1 were tested at a total active concentration of 100 ppm, for activity against bacteria, yeasts and fungi in backwater containing ketene dimer.

Synergism was observed at all ratios, but optimum synergism in respect of overall biocidal performance was at 3:7 THPS:TCMTB by weight. This composition gave a total kill of all three categories of microorganism in six hours.

## Claims

1. A synergistic biocidal composition comprising effective synergistic proportions of:
   (i) a tetrakis (hydroxymethyl) phosphonium cation; and
   (ii) 2-thiocyanomethyl thio-benzthiazole.

2. A composition according to Claim 1 wherein the counter-ion to the cation in (i) is sulphate.

3. A composition according to Claim 1 wherein the proportion of (i) and (ii) is from 1:9 to 10:1.

4. A composition according to Claim 3 wherein the proportion of (i) to (ii) is from 1:3 to 9:1.

5. A composition according to any foregoing claim which additionally comprises a surfactant.

6. A composition according to any foregoing claim which comprises an aqueous solution of the components (i) and (ii).

7. A composition according to any foregoing claim which comprises a minor proportion of a water miscible solvent.

8. A method of treating water systems to kill or inhibit the growth therein of microorganisms which comprises adding thereto, or forming therein by separate addition of the components (i) and (ii), a composition according to any foregoing claim.

9. A method according to Claim 8 for treatment of boiler water, cooling water, industrial process water, geothermal water or water in central heating or air conditioning systems.

10. A method according to Claim 8 for treatment of oilfield produced water, injection water, drilling fluids or water for hydrostatic testing.

11. A method according to Claim 8 for inhibiting slime formation in paper pulps, and paper mill thin stock and backwash liquors.

12. A method of disinfecting surfaces which comprises applying thereto a composition according to any of Claims 1 to 7.

13. A method of killing, or inhibiting the growth of, plant pathogens in soil, hydroponic medial and on higher plants, which comprises applying thereto, or forming thereon, a composition according to any of Claims 1 to 7.

## Patentansprüche

1. Synergistische biozide Zusammensetzung, enthaltend wirksame synergistische Mengen von
   (i) einem Tetrakis-(hydroxymethyl)phosphonium-Kation; und
   (ii) 2-Thiocyanomethyl-thio-benzthiazol.

2. Zusammensetzung nach Anspruch 1, wobei das Gegenion zum Kation in (i) Sulfat ist.

3. Zusammensetzung nach Anspruch 1, wobei das Mengenverhältnis von (i) und (ii) 1:9 bis 10:1 beträgt.

4. Zusammensetzung nach Anspruch 3, wobei das Mengenverhältnis (i) zu (ii) von 1:3 bis 9:1 beträgt.

5. Zusammensetzung nach den vorstehenden Ansprüchen, zusätzlich enthaltend ein oberflächenaktives Mittel.

6. Zusammensetzung nach den vorhergehenden Ansprüchen, enthaltend eine wäßrige Lösung der Komponenten (i) und (ii).

7. Zusammensetzung nach den vorhergehenden Ansprüchen, enthaltend eine kleinere Menge eines mit Wasser mischbaren Lösungsmittels.

8. Verfahren zur Behandlung von Wassersystemen zur Abtötung oder Hemmung des Wachstums von Mikroorganismen darin, gekennzeichnet durch Zusetzen oder darin Bilden durch getrennten Zusatz der Komponenten (i) und (ii) einer Zubereitung gemäß den vorhergehenden Ansprüchen.

9. Verfahren nach Anspruch 8 zur Behandlung von Boilerwasser, Kühlwasser, industriellem Verfahrenswasser, geothermischem Wasser oder Wasser in Zentralheizungs- oder Airconditioningsystemen.

10. Verfahren nach Anspruch 8 zur Behandlung von Wasser aus Ölfeldern, Injektionswasser, Bohrflüssigkeiten oder Wasser für hydrostatische Versuchszwecke.

11. Verfahren nach Anspruch 8 zur Hemmung der Schleimbildung in Papierpulpen und Dünnlauge von Papierfabriken und Rückwaschlaugen.

12. Verfahren zur Desinfektion von Oberflächen, gekennzeichnet durch Aufbringen einer Zubereitung nach jedem der Ansprüche 1 bis 7.

13. Verfahren zum Abtöten oder Wachstumshemmen von Pflanzenpathogenen im Boden, hydroponischen Medien und auf höheren Pflanzen, gekennzeichnet durch Aufbringen oder daran Bilden einer Zusammensetzung nach den Ansprüchen 1 bis 7.

## Revendications

1. Composition biocide synergique contenant des proportions synergiques efficaces de:
   (i) un cation de tétrakis(hydrométhyl)phosphonium; et
   (ii) du 2-thiocyanométhylthlobenzothiazole.

2. Composition selon la revendication 1 dans laquelle le contre-ion du cation en (i) est un sulfate.

3. Composition selon la revendication 1 dans laquelle la proportion de (i) et de (ii) est de 1:9 à 10:1.

4. Composition selon la revendication 3 dans laquelle la proportion de (i) à (ii) est de 1:3 à 9:1.

5. Composition selon l'une quelconque des revendications précédentes qui contient de manière additionnelle un surfactant.

6. Composition selon l'une quelconque des revendications précédentes qui contient une solution aqueuse des composants (i) et (ii).

7. Composition selon l'une quelconque des revendications précédentes qui contient une proportion mineure d'un solvant miscible à l'eau.

8. Procédé de traitement des systèmes contenant de l'eau pour y tuer ou inhiber la croissance des microorganismes qui comprend l'addition, ou la formation par addition séparée des composants (i) et (ii), d'une composition selon l'une quelconque des revendications précédentes.

9. Procédé selon la revendication 8 pour le traitement de l'eau de chaudière, de l'eau de refroidissement, de l'eau des installations industrielles, de l'eau géothermique ou de l'eau des chauffages centraux ou les systèmes de conditionnement d'air.

10. Procédé selon la revendication 8 pour le traitement de l'eau produite dans les champs pétrolifères, l'eau d'injection, les liquides de forage ou l'eau pour les tests hydrostatiques.

11. Procédé selon la revendication 8 pour inhiber la formation de dépôt visqueux dans les pâtes à papier, et dans le stock des moulins à papier et les liqueurs en retour de lavage.

12. Procédé de désinfection des surfaces qui comprend l'application d'une composition selon l'une quelconque des revendications 1 à 7.

13. Procédé pour tuer, ou inhiber la croissance des pathogènes des plantes dans les sols, les plantes hydroponiques moyennes et supérieures, qui comprend l'application ou la formation interne d'une composition selon l'une quelconque des revendications 1 à 7.

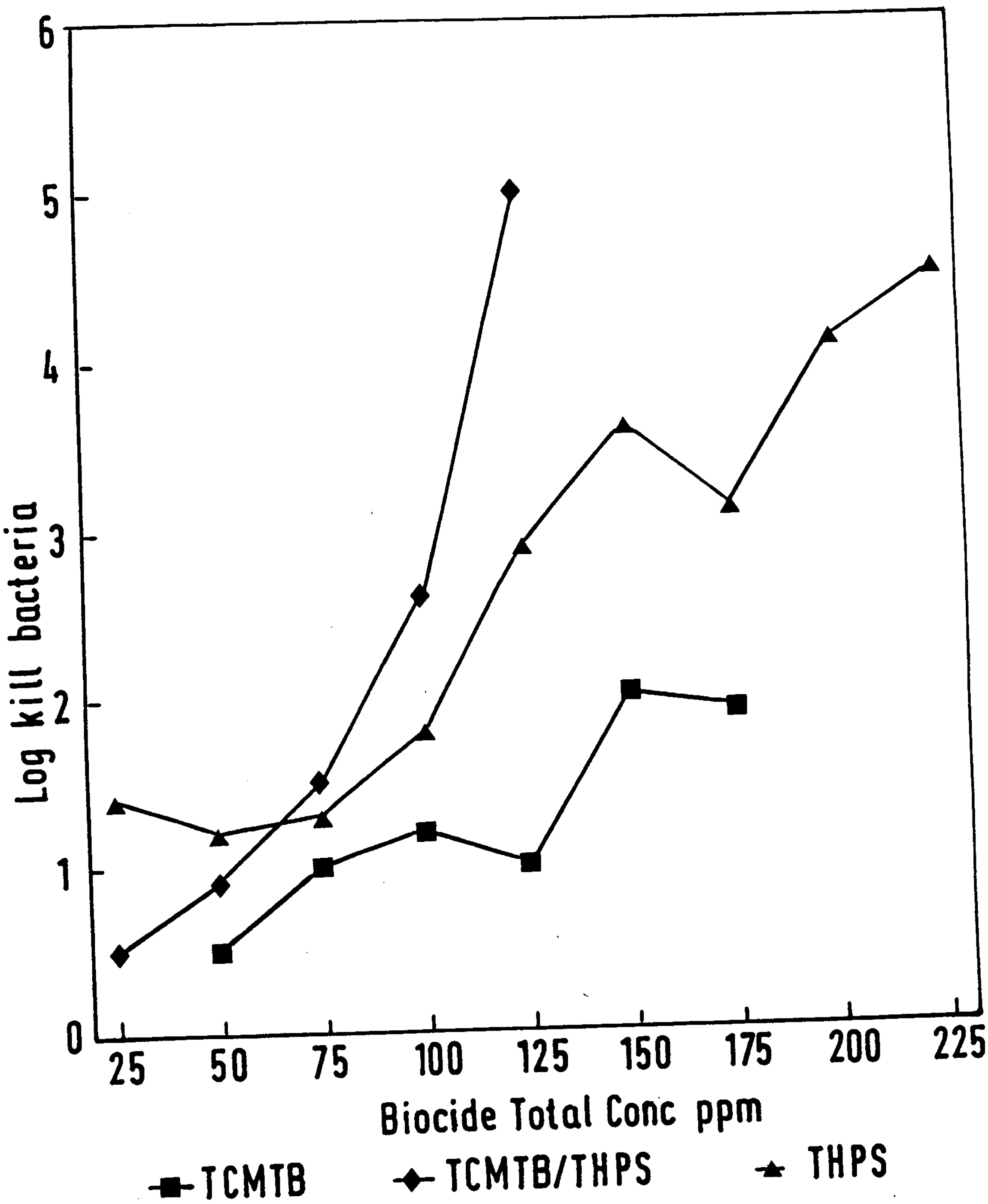
6
5
4
3
2
1
0
Log kill bacteria
25
50
75
100
125
150
175
200
225
Biocide Total Conc ppm
TCMTB
TCMTB/THPS
THPS

FIG.1

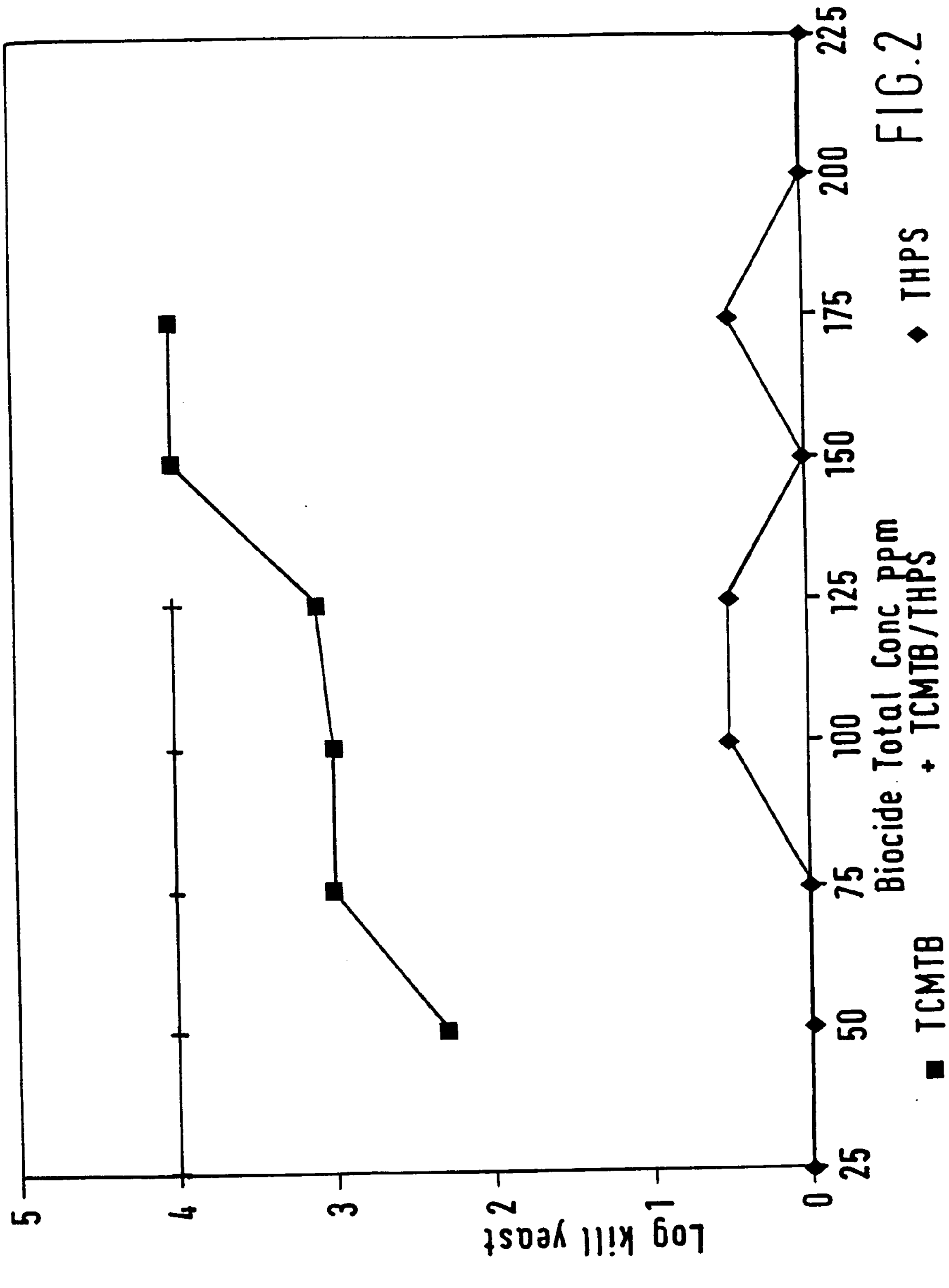
Log kill yeast
0
1
2
3
4
5
25
50
75
100
125
150
175
200
225
Biocide Total Conc ppm
■ TCMTB
+ TCMTB/THPS
◆ THPS

FIG.2

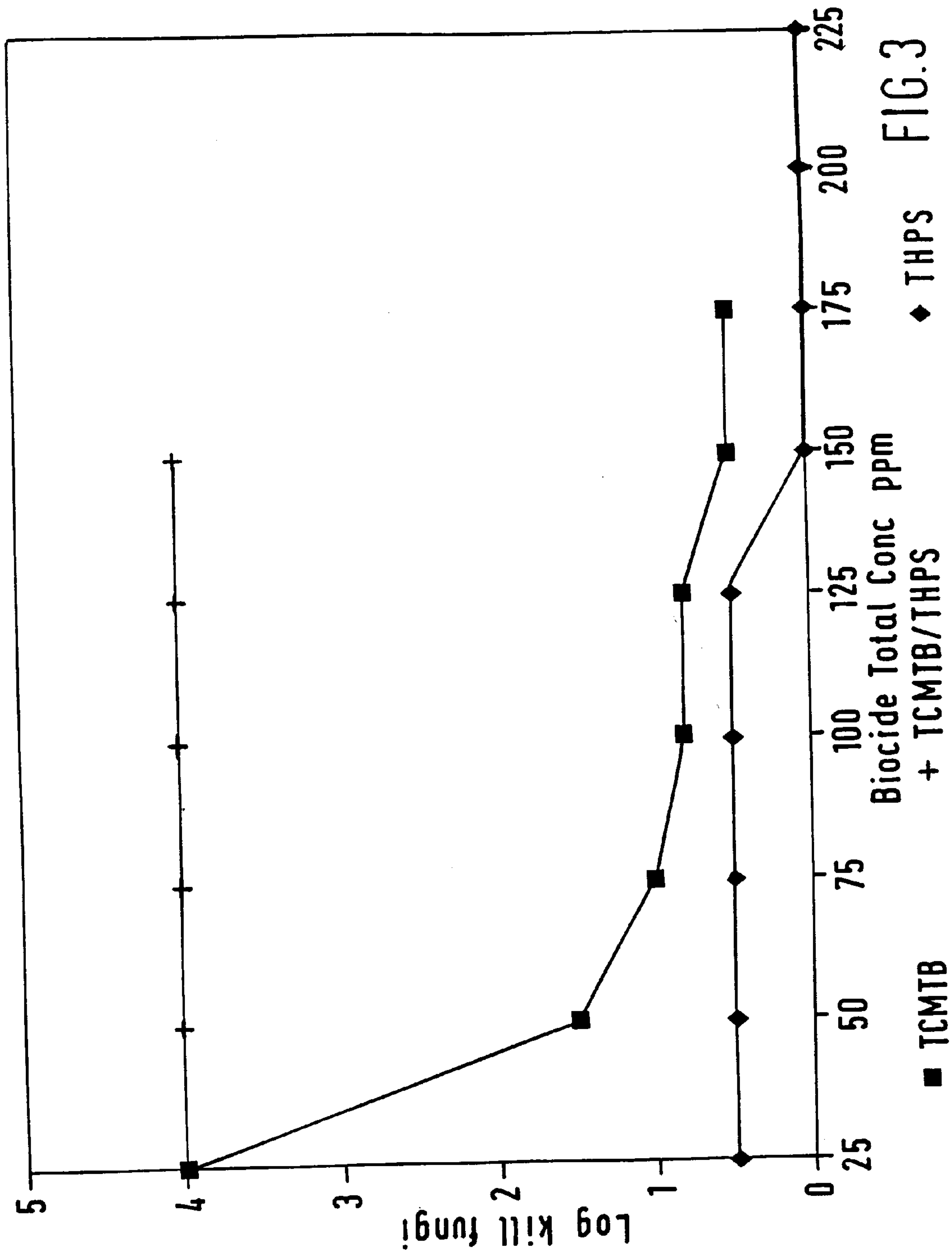
Log kill fungi
0
1
2
3
4
5
25
50
75
100
125
150
175
200
225
Biocide Total Conc ppm
■ TCMTB
+ TCMTB/THPS
◆ THPS

FIG.3